**Europäisches Patentamt**

**European Patent Office**

**Office européen des brevets**

(11) Veröffentlichungsnummer: **0 111 254**
**A1**

(12) EUROPÄISCHE PATENTANMELDUNG

(21) Anmeldenummer: 83112041.5

(22) Anmeldetag: 01.12.83

(51) Int. Cl.³: **A 01 G 7/06**

(30) Priorität: 08.12.82 DE 8234409 U

(43) Veröffentlichungstag der Anmeldung:
20.06.84 Patentblatt 84/25

(84) Benannte Vertragsstaaten:
- AT CH DE FR GB IT LI

(71) Anmelder: **HOECHST AKTIENGESELLSCHAFT**
**Postfach 80 03 20**
**D-6230 Frankfurt am Main 80(DE)**

(72) Erfinder: **Sallach, Werner**
**Engelsbyerstrasse 118**
**D-2390 Flensburg(DE)**

(72) Erfinder: **John, Peter**
**Sachsenring 6**
**D-6238 Hofheim am Taunus(DE)**

(54) **Vorrichtung zum Injizieren von Pflanzenbehandlungsmitteln in Bäume.**

(57) Die Vorrichtung besteht im wesentlichen aus einer Holzschraube (1) mit axialer Bohrung (2). Die axiale Bohrung (2) mündet in eine radiale Bohrung (3) ein, die sich 3 - 15 mm von der Schraubenspitze (4) entfernt befindet. Das der Schraubenspitze gegenüberliegende Ende der Holzschraube ist mit Mitteln (12, 13) zum Eindrehen derselben und mit Mitteln zur Aufnahme eines Vorratsbehälters (6) für Pflanzenbehandlungsmittel versehen.

FIG.2

FIG.1

EP 0 111 254 A1

Vorrichtung zum Injizieren von Pflanzenbehandlungsmitteln in Bäume

Die Erfindung betrifft eine Vorrichtung, mit der Pflanzenbehandlungsmittel in die Kambiumschicht der Bäume geleitet werden kann.

Es ist bekannt, Pflanzenbehandlungsmittel mittels Injektionshohlnadeln in den Stamm einer Pflanze eindringen zu lassen. Zu diesem Zweck wird die Hohlnadel in den Stamm der Pflanze eingestoßen, und auf das aus dem Stamm herausstehende Ende ein Behälter mit Pflanzenbehandlungsmittel aufgesetzt. Nachteilig bei dieser Vorrichtung ist, daß Hilfsmittel benötigt werden, um die Hohlnadel unbeschädigt in den Stamm zu treiben und daß es schwierig ist, die den Pflanzensaft führende Kambiumschicht zu treffen, damit das Pflanzenbehandlungsmittel von diesem mitgenommen werden kann. Nachteilig ist ferner, daß durch das Einschlagen der Hohlnadel der Stamm der Pflanze reißt, insbesondere wenn er dünn ist, wodurch Schädlinge eindringen können.

Hier will die Erfindung Abhilfe schaffen. Es ist demnach die Aufgabe zu lösen, eine Vorrichtung zum Injizieren von Pflanzenbehandlungsmitteln in Bäume zu schaffen, die einfach und sicher in die Kambiumschicht der Bäume eingebracht werden kann.

Die Aufgabe wird durch eine Vorrichtung gelöst, die dadurch gekennzeichnet ist, daß die Vorrichtung im wesentlichen aus einer Holzschraube besteht, die eine axiale Bohrung aufweist, die in eine radiale Bohrung einmündet, deren Abstand von der Schraubenspitze 3 bis 15 mm beträgt, und daß das der Schraubenspitze gegenüberliegende Ende der Schraube mit Mitteln zum Eindrehen der Schraube versehen ist.

Die  axiale Bohrung kann mit Mitteln, z.B. einem Adapter zur Aufnahme eines Vorratsbehälters für Pflanzenbehandlungsmittel versehen sein. Es kann zur Vermeidung von Verstopfungen zweckmäßig sein, die Holzschraube im Bereich der radialen Bohrung mit einer Taille zu versehen und/oder die  axiale Bohrung mit einem Reinigungsstift mit Verschlußkappe. Der Vorratsbehälter kann als Kolbenpumpe, z.B. als eine Injektionsspritze ausgebildet sein. Als Mittel zum Eindrehen der Schraube in  den Baum eignen sich Angriffsflächen außen (Sechskant, Vierkant, Zweikant) oder innen (Schlitz, Kreuzschlitz, Innensechskant usw.) oder Knebel.

Die durch die Erfindung erreichten Vorteile sind im wesentlichen darin zu sehen, daß mit ihrer Hilfe Pflanzenbehandlungsmittel wie Fungizide, Insektizide, Akarizide und Nährlösungen sicher und sparsam in den Saftstrom des Baumes eingeleitet werden können, ohne daß die Atmosphäre der Boden- oder Anrainer durch Abtriften oder Abtropfen belastet werden, wie es beim Spritzen der Behandlungsmittel geschieht.

Die Erfindung wird im folgenden anhand der Figuren, die lediglich einen Ausführungsweg darstellen, näher erläutert.

Figur 1 zeigt die Vorrichtung teilweise geschnitten  mit aufgesetztem Vorratsbehälter.

Figur 2 zeigt die Vorrichtung teilweise geschnitten mit Reinigungsstift mit Verschlußkappe.

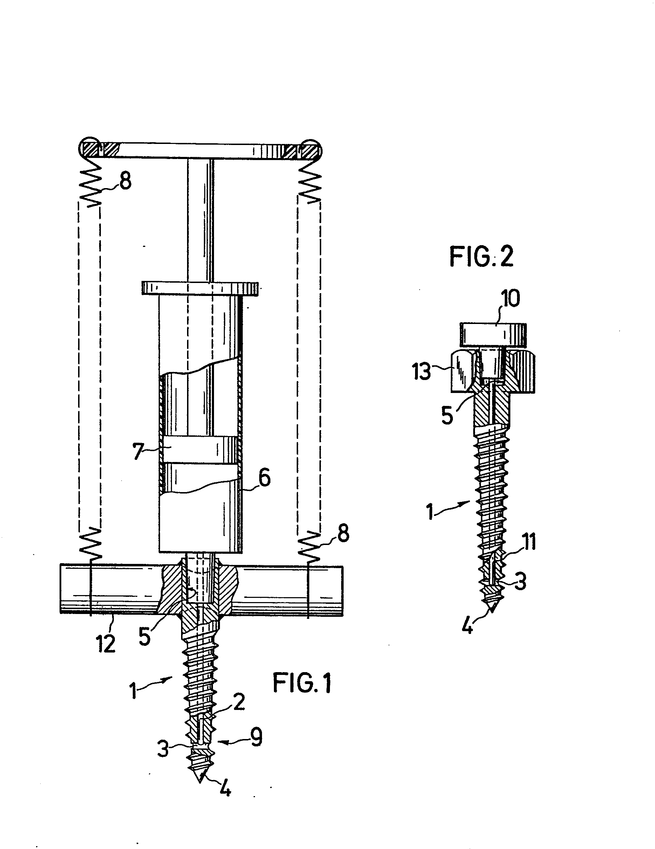

Die Erfindung besteht im wesentlichen aus einer Holzschraube, Blechtreibschraube oder dergleichen  (1), die mit einer  axialen Bohrung (2) versehen ist . Die axiale Bohrung (2) mündet in eine radiale Bohrung (3) ein, deren Abstand von der Spitze (4) der Schraube (1) 3 bis 15 mm beträgt. Die axiale Bohrung (2) ist mit Mitteln (5) zur Aufnahme eines Vorratsgefäßes (6) versehen. Das Vorratsgefäß (6) kann ein einfacher Behälter oder eine Injektionsspritze oder dergleichen sein. Die Verbindung zwischen Vorratsgefäß und axialer Bohrung kann über ein Gewinde kraftschlüssig oder über eine Art Muffenverbindung erfolgen. Der Kolben (7) kann mittels geeigneter Einrichtungen wie Federn (8) oder dergleichen belastet werden. Die Holzschraube (1) kann im Bereich der radialen Bohrung (3) eine Taille (9) aufweisen. Zum Verschließen der axialen Bohrung (2) eignet sich eine Verschlußkappe (10), die mit einem Reinigungsstift (11) für die Bohrung (2) versehen ist. Die Länge und Stärke der Schraube richtet sich nach der Dicke der Rinde des Baumes. Stärken zwischen 3 und 10 mm Durchmesser und Längen zwischen 30 und 100 mm dürften ausreichend sein. Zum Eindrehen der Schrauben eignen sich alle gängigen Hilfsmittel.Gemäß Figur 1 ist die Schraube mit einem Knebel (12) versehen, gemäß Figur 2 mit einer sechskantigen Außenangriffsfläche (13).

0111254

PATENTANSPRÜCHE:

1. Vorrichtung zum Injizieren von Pflanzenbehandlungsmitteln in Bäume, dadurch gekennzeichnet, daß die
Vorrichtung im wesentlichen aus einer Holzschraube
(1) besteht, die eine axiale Bohrung (2) aufweist,
die in eine radiale Bohrung (3) einmündet, deren
Abstand von der Schraubenspitze (4) 3-15 mm beträgt
und daß das der Spitze gegenüberliegende Ende der
Schraube mit Mitteln 12,13 zum Eindrehen der Schraube
versehen ist.

2. Vorrichtung nach Anspruch 1, dadurch gekennzeichnet,
daß die axiale Bohrung (3) mit Mitteln (5) zur Aufnahme eines Vorratsbehälters (6) für Pflanzenbehandlungsmittel versehen ist.

3. Vorrichtung nach Anspruch 3, dadurch gekennzeichnet,
daß die Holzschraube (1) im Bereich der radialen
Bohrung (3) eine Taille (9) aufweist.

4. Vorrichtung nach Anspruch 1, dadurch gekennzeichnet,
daß die axiale Bohrung (2) mit einem Reinigungsstift
(11) mit Verschlußkappe (10) versehen ist.

5. Vorrichtung nach Anspruch 2, dadurch gekennzeichnet,
daß der Vorratsbehälter (6) als Kolbenpumpe ausgebildet
ist.

0111254

FIG.1

FIG.2

Europäisches
Patentamt

# EUROPÄISCHER RECHERCHENBERICHT

EP 83 11 2041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-2 367 424 (SANDOZ) <br> * Seite 2, Zeile 22 - Seite 3, Zeile 31; Figuren 1-5 * <br> --- | 1,2 | A 01 G 7/06 |
| X | US-A-3 968 594 (KAWAKAMI) <br> * Spalte 3, Zeile 43 - Spalte 4, Zeile 60; Figuren 3-5 * <br> --- | 1,3 | |
| A | US-A-4 164 093 (STERRETT) <br> * Spalte 2, Zeile 61 - Spalte 3, Zeile 5; Figuren 1,2 * <br> --- | 2,5 | |
| A | FR-A-2 149 650 (KUHLMANN) <br> * Seite 2, Zeile 1 - Seite 3, Zeile 7; Figuren 1,2 * <br> --- | 4 | |
| A | US-A-2 580 385 (HOCHMUTH) <br> * Spalte 2, Zeile 20 - Spalte 3, Zeile 26; Figur 1 * <br> ----- | 4 | RECHERCHIERTE SACHGEBIETE (Int. Cl. 3) <br><br> A 01 G <br> B 05 B <br> A 61 M |

Der vorliegende Recherchenbericht wurde für alle Patentansprüche erstellt.

| Recherchenort | Abschlußdatum der Recherche | Prüfer |
|---|---|---|
| DEN HAAG | 16-03-1984 | HERYGERS J.J. |